# EUROPEAN PATENT SPECIFICATION

(11) **EP 2 218 377 B1**
(45) Date of publication and mention of the grant of the patent: **07.09.2011**
(21) Application number: 10152990.7
(22) Date of filing: 09.02.2010
(51) Int. Cl.: A47J 31/44

(54) **Device and process for the entrainment of a liquid in an emulsifying device of a coffee machine**
Vorrichtung und Verfahren zum Saugen einer Flüssigkeit in einer Emulgationsvorrichtung einer Kaffeemaschine
Appareil et procédé pour l'aspiration d'un liquide dans un dispositif d'émulsification d'une machine à café

(30) Priority: 13.02.2009 IT MI20090193
(43) Date of publication of application: 18.08.2010
(73) Proprietor: De'Longhi Appliances S.r.l., 31100 Treviso (IT)
(72) Inventor: De'Longhi, Giuseppe, 31100 Treviso (IT)
(74) Representative: Rapisardi, Mariacristina

(56) References cited:
- DE-C1- 19 719 784
- DE-U1-202007 009 537

## Description

The present invention relates to a device and a procedure for the entrainment of a liquid to emulsify with steam coming from a hydraulic circuit in a coffee-making machine.

It is common knowledge that the liquid, and milk in particular, is entrained from inside a container through a suction tube due to the effect of a negative pressure created by the flow of steam to a collector connected thereto.

The mixture of milk and steam thus enables hot milk to be delivered into the cup.

To raise the temperature of the milk, it becomes necessary to modify the ratio of the steam to the milk.

In particular, to obtain warmer milk, the flow rate of the milk entrained from the container has to be reduced, while leaving the flow rate of the steam unchanged.

This reduction in the flow rate of the milk from the container has conventionally been achieved by means of a narrowing of the suction tube. Obstructing the flow can interfere, however, with the proper entrainment of the milk during the initial phase of its entrainment.

This gives rise to an initially intermittent delivery into the cup, with a consequent splashing of steam and milk that can injure the user, e.g. causing troublesome scalding lesions. DE-U-202 00 700 9537 discloses a device for the entrainment of a liquid according to preamble of claim 1.

The technical aim of the present invention is consequently to achieve a device and a procedure for the entrainment of a liquid to emulsify with steam coming from a hydraulic circuit in a coffee-making machine that enable the technical drawbacks of the known art to be overcome.

Within the context of this technical aim, one object of the invention is to produce a device and a procedure for the entrainment of a liquid to emulsify with steam coming from the hydraulic circuit of a coffee-making machine that ensures an even and continuous delivery of the heated liquid at the required temperature. The above technical aim, as well as this and other objects according to the present invention, are achieved by a device and a procedure for the entrainment of a liquid to emulsify with steam coming from the hydraulic circuit of a coffee-making machine according to the independent claims stated below.

Using suitable valve means comprising a movable shutter inserted in the tube, a passage for the flow of the liquid through the tube is advantageously maintained so that it is wider in the initial phase to enable the entrainment process while, in the subsequent phase of entrainment of the flow of liquid, the movable shutter is displaced and thus narrows the passage for the flow, thereby increasing the final temperature of the entrained liquid.

Other characteristics of the present invention are explained in the dependent claims.

Further characteristics and advantages of the invention will emerge more clearly from the description of preferred, but not exclusive embodiments of the device and procedure for the entrainment of a liquid to emulsify with steam coming from a hydraulic circuit in a coffee-making machine according to the present invention, as illustrated as a non-limiting example in the attached drawings, wherein:
- figure 1 shows a schematic view of the hydraulic circuit of a coffee-making machine presenting an entrainment device according to a first preferred embodiment of the invention;
- figure 2 shows an axial cross-sectional view of the entrainment device in figure 1, with the shutter in the position required to enable the entrainment;
- figure 3 shows an axial cross-sectional view of the entrainment device in figure 1, with the shutter in the position required once the entrainment has been enabled;
- figure 4 shows a view from above of the entrainment device, corresponding to the cross-section along c-c in figure 3;
- figure 5 shows an axial cross-sectional view of the entrainment device according to a second preferred embodiment of the invention, with the shutter in the position required to enable the entrainment;
- figure 6 shows an axial cross-sectional view of the entrainment device in figure 5, with the shutter in the position required once the entrainment has been enabled;
- figure 7 shows a view from above of the entrainment device, corresponding to the cross-section along c-c in figure 6;
- figure 8 shows an axial cross-sectional view of the entrainment device according to a third preferred embodiment of the invention, with the shutter in the position required to enable the entrainment;
- figure 9 shows an axial cross-sectional view of the entrainment device in figure 8, with the shutter in the position required once the entrainment has been enabled;
- figure 10 shows a view from above of the entrainment device, corresponding to the cross-section along c-c of figure 8;
- figure 11 shows an axial cross-sectional view of an entrainment device according to a fourth preferred embodiment of the invention, with the shutter in the position required to enable the entrainment;
- figure 12 shows an axial cross-sectional view of the entrainment device in figure 11, with the shutter in the position required once the entrainment has been enabled;
- figure 13 shows a view from above of the entrainment, device, corresponding to the cross-section along c-c of figure 11.

Equivalent parts are identified by the same numerical references in the various preferred embodiments of the invention.

The above-mentioned figures show an entrainment device, indicated globally by the reference numeral 1, of the type comprising a suction tube 2 particularly suitable for connecting to a collector 3 carrying the steam coming from the hydraulic circuit 4 of a coffee-making machine.

The collector 3 has an internal cross-section in the shape of a Venturi tube in order to create a negative pressure in the suction tube 2 with the passage of a flow of steam, so as to induce the entrainment of the liquid 5, i.e. the milk, from the container 6.

The hydraulic circuit 4 of the coffee-making machine comprises a steam generating boiler 7 upstream from the collector 3 and a nozzle 8 downstream from the collector 3 for delivering the liquid emulsified by the steam into a cup 9.

Inside the suction tube 2, there are valve means comprising a shutter 10 movable between a position for enabling the entrainment, wherein the shutter 10 opens a passage inside the suction tube 2 suitable for inducing the entrainment of the liquid, and a position suitable once the entrainment has been enabled, wherein the shutter 10 opens an entrainment passage inside the suction tube 2 that is narrower than the one opened in the entraimnent enabling position.

The entrainment enabling position of the shutter 10 advantageously corresponds to its lowered position, which it occupies due to the effect of its self weight.

The position required of the shutter 10 once the entrainment has been enabled corresponds instead to its raised position, which it occupies due to the effect of the negative pressure created in the suction tube 2 by the passage of the steam towards the collector 3.

The suction tube 2 is preferably made of an elastically deformable material so as to enable the shutter 10 to be installed inside the tube by means of a snap action, as explained later on.

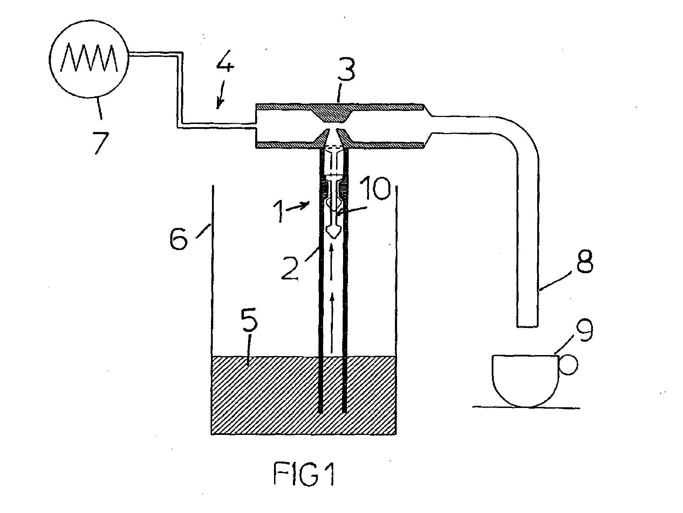

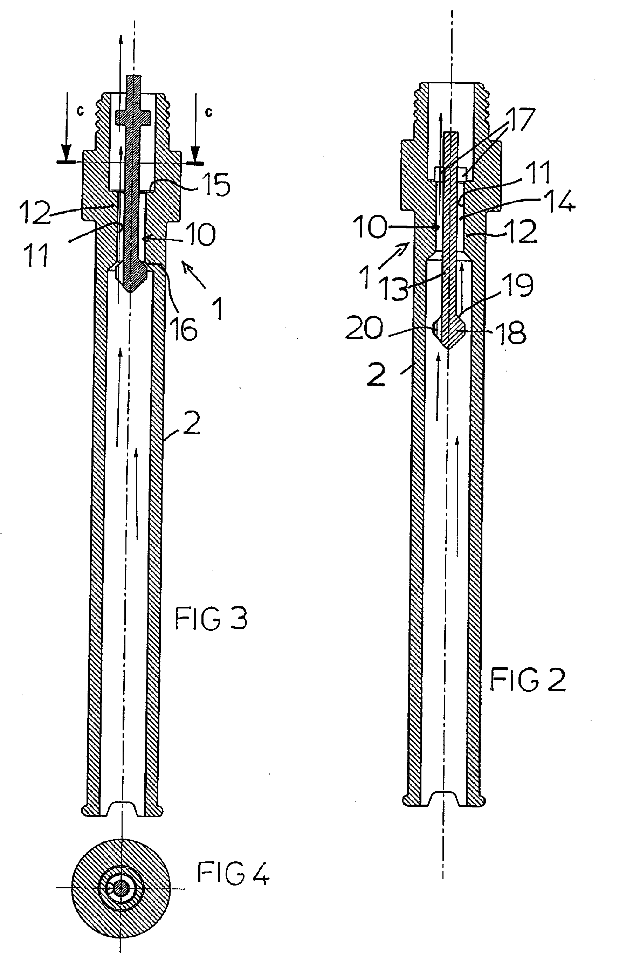

We refer for now to figures 1-7.

The shutter 10 is obliged to slide axially inside a hole 11 in a supporting bracket 12 provided on the inside of the suction tube 2.

The shutter 10 has a stem-shaped body 13 sliding inside the hole 11, with which the stem-shaped body 13 forms a cavity 14 for the passage of the liquid. The upper part of the stem-shaped body 13 comprises means of abutment against the upper surface 15 of the bracket 12, and the lower part comprises means of abutment against the lower surface 16 of the bracket 12.

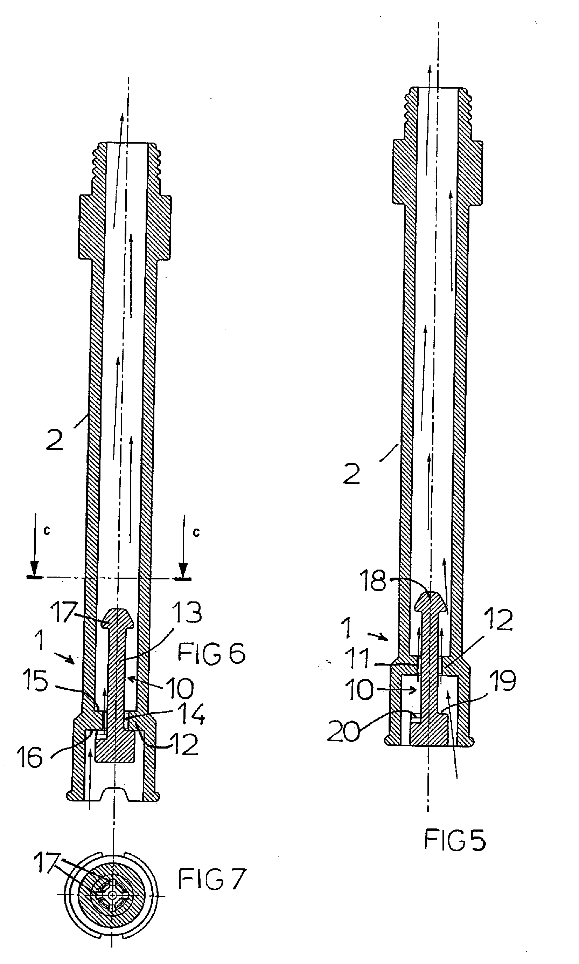

In the embodiment shown in figures 1-4, the upper abutment means comprise angularly staggered radial wings 17 and the lower abutment means comprise an enlarged head 18; vice versa, in the embodiment of figures 5-7, the upper abutment means comprise an enlarged head 18 and the lower abutment means comprise angularly staggered radial wings 17.

The radial wings 17 (as shown in the embodiment in figures 5-7) and/or the enlarged head 18 (as shown in the embodiment in figures 1-4) are preferably - tapered to enable the assembly of the shutter 10 inside the suction tube 2 by means of a snap action under pressure, through the hole 11 in the bracket 12. The enlarged head 18 comprises a surface 19 closing over the hole 11 in the bracket 12.

The closing surface 19 has at least one groove 20 (axial in the embodiment in figures 1-4, radial in the embodiment in figures 5-7) for the calibrated passage of the liquid through the cavity 14.

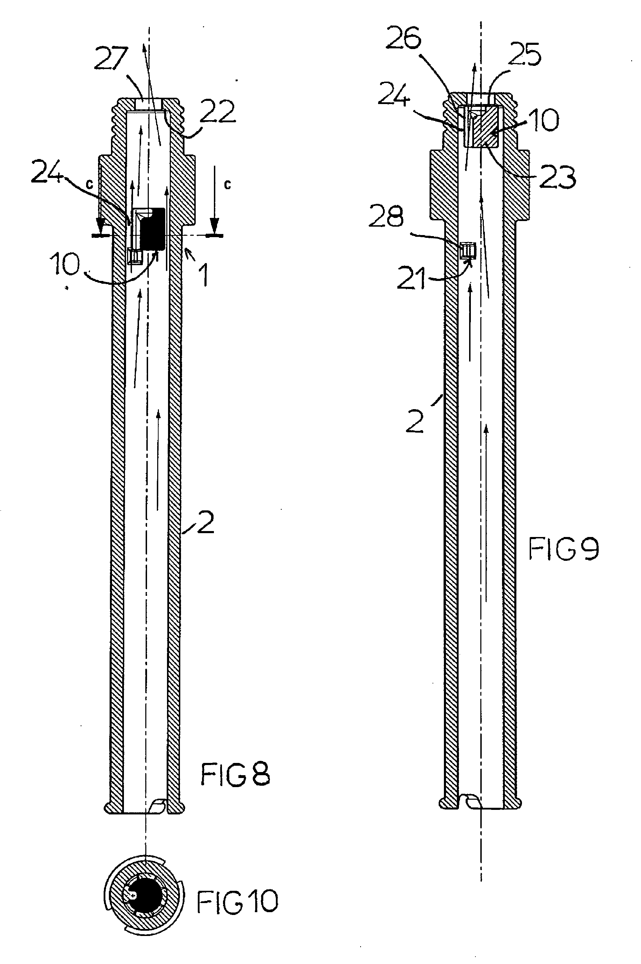

We refer now to figures 8 to 13.

Inside the suction tube 2 there is an axially-opening lower base 21 and an axially-opening upper base 22, between which the shutter 10 is axially movable.

In this case, the shutter 10 comprises a pin 23 laterally forming a ring-shaped cavity 24 together with the suction tube 2.

In the embodiment shown in figures 8-10, the pin 23 has a surface 25 closing over the opening 27 in the upper base 22 and said closing surface 25 in turn has at least one groove 26 for the calibrated passage of the liquid through the opening 27. In particular, the lower base 21 comprises a plurality of projections 28 lying around an internal circumference in an intermediate section of the suction tube 2, while the upper base 22 is located at the upper end of the suction tube 2.

In the embodiment shown in figures in 11-13, the upper base 22 comprises a tubular element 29 installed inside the suction tube 2. Between the outer lateral surface of the tubular element 29 and the inner lateral surface of the suction tube 2 there is a space 30 for the calibrated passage of the liquid. The pin 23 has a surface 31 for selectively closing the tubular element 29 to enable the passage of the liquid exclusively through the space 30.

The procedure for delivering a continuous and even flow of liquid heated to the required temperature in the cup consists in opening an ample passage, by means of the shutter 10, for the entrainment of the liquid inside the suction tube 2 so as to facilitate the initial phase for enabling the entrainment of the liquid, and subsequently reducing said passage so as to heat the liquid adequately.

The path of the liquid in the entrainment enabling configuration and in the subsequent configuration once the entrainment process has been enabled is represented in the figures by means of directional arrows, while the axis of the suction tube 2 is represented in the figures by a line of dots and dashes.

With reference to the embodiments in figures 1-7, when the shutter 10 is in the entrainment enabling position, the liquid is drawn the useful cross-section of the cavity 14, whereas when the shutter 10 is in the subsequent position, the liquid is entrained only through the much narrower cross-section of the groove 20 communicating with the cavity 14.

With reference to the embodiment in figures 8-10, when the shutter 10 is in the position for enabling entrainment, the liquid is drawn through the full useful cross-section of the opening 27, but when the shutter 10 is in the subsequent position, the liquid is entrained only through the much narrower cross-section of the groove 26 in the pin 23 communicating with the opening 27.

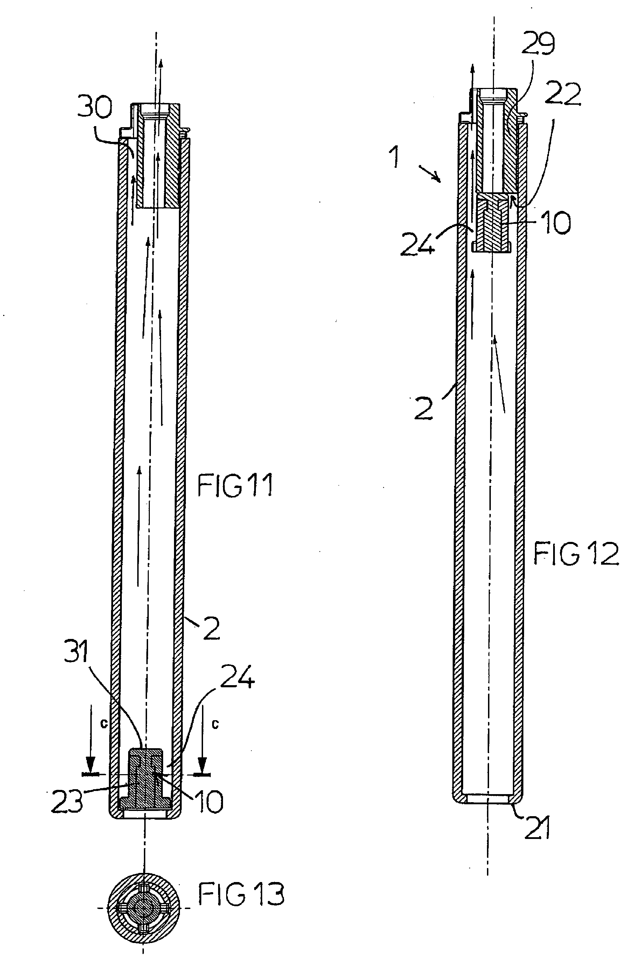

Finally, with reference to the embodiment shown in figures 11-13, when the shutter 10 is in the entrainment enabling position, the liquid is drawn through the full useful cross-section both of the tubular element 29 and of the passage 31, whereas with the shutter 10 in the subsequent position the liquid is only drawn through the useful cross-section of the passage 30.

It has been demonstrated in practice that the device according to the invention is particularly advantageous because two different flow rate conditions are established for the entrainment of the liquid, i.e. a higher flow rate to initially enable the entrainment and a lower flow rate for the subsequent entrainment, by means of which a continuous and even delivery of the liquid, heated to the required temperature, is achieved.

The operation of the entrainment device is particularly reliable because the displacement of the shutter is due to two natural principles, i.e. the force of its self weight and the force of the negative pressure created by the Venturi effect. The entrainment device thus conceived may undergo numerous modifications and variants, all coming within the scope of the inventive concept as defined in the claims. Moreover, all the parts may be substituted by technically equivalent components.

In other words, any materials may be used, and in any dimensions, according to need and the state of the art.

## Claims

1. A device (1) for the entrainment of a liquid comprising a suction tube (2) suitable for connecting to a collector (3) receiving steam from the hydraulic circuit (4) in a coffee-making machine, valve means inside said tube (2) consisting of a shutter (10) movable between a position for enabling the entrainment, wherein said shutter (10) opens an ample entrainment passage inside said suction tube (2), and a subsequent position, once said entrainment has been enabled, wherein said shutter (10) opens inside said suction tube (2) a narrower entrainment passage than was first opened to induce said entrainment,
**characterised in that** said entrainment enabling position corresponds to a lowered shutter (10) position, achieved by the effect of its own weight.

2. An entrainment device (1) according to claim 1, **characterised in that** said subsequent position after enabling the entrainment corresponds to a raised shutter (10) position achieved by the effect of the under-pressure created inside said tube (2) by the passage of said steam towards said collector (3).

3. An entrainment device (1) according to one or more of the previous claims, **characterised in that** said tube (2) is made of an elastically deformable material.

4. An entrainment device (1) according to one or more of the previous claims, **characterised in that** said shutter (10) is constrained so as to slide axially inside a hole (11) in a supporting bracket (12) provided inside said tube (2).

5. An entrainment device (1) according to claim 4, **characterised in that** said shutter (10) has a stem-shaped body (13) sliding inside said hole (11), with which said stem-shaped body (13) delimits a cavity (14) for the passage of said liquid, said stem-shaped body (13) having upper means of abutment against the upper surface (15) of said bracket (12), and lower means of abutment against the lower surface (16) of said bracket (12).

6. An entrainment device (1) according to claim 5, **characterised in that** said abutment means comprise angularly staggered radial wings (17).

7. An entrainment device (1) according to claims 5-6, **characterised in that** said abutment means comprise an enlarged head (18).

8. An entrainment device (1) according to claims 6-7, **characterised in that** said radial wings (17) and/or said enlarged head (18) are tapered.

9. An entrainment device (1) according to claim 7, **characterised in that** said enlarged head (18) comprises a closure surface (19) over said hole (11) in said bracket (12) having at least one groove (20) for the calibrated passage of said liquid through said cavity (14).

10. An entrainment device (I) according to one or more of the previous claims, **characterised in that** the inside of said tube (2) contains an axially open lower support base (21) and an axially open upper support base (22) between which said shutter (10) is axially movable.

11. An entrainment device (1) according to claim 10, **characterised in that** said shutter (10) comprises a pin (23) laterally forming a ring-shaped cavity (24) together with said tube (2).

12. An entrainment device (1) according to claim 11, **characterised in that** said pin (23) has a closure surface (25) over said open upper base (22) with at least one groove (26) for the calibrated passage of said liquid through said open upper base (22).

13. An entrainment device (1) according to claim 10, **characterised in that** said open upper base (22) comprises a tubular element (29) contained inside said tube (2) and **in that**, between the outer lateral surface of said tubular element (29) and the inner lateral surface of said tube (2), there is a space (30) for the calibrated passage of said liquid.

14. An entrainment device (1) according to claim 13, **characterised in that** said pin (23) has a surface (31) for selectively closing said tubular element (29), adapted to enable the passage of said fluid exclusively through said space (30).

15. A procedure for the entrainment of a liquid by means of an entrainment device comprising a suction tube (2) adapted to be connected to a collector (3) receiving the steam from the hydraulic circuit (4) of a coffee-making machine, **characterised in that** of initially opening an ample passage inside said suction tube (2) to enable fluid entrainment by positioning a shutter (10) contained inside said suction tube (2) in a lowered position, achieved by the effect of its own weight, and reducing said passage for the subsequent entrainment phase, in order to heat said liquid to the required temperature by means of said steam by moving said shutter (10) inside said suction tube (2) into a raised position achieved by the effect of the under-pressure created by the flow of steam through said collector (3).

16. A coffee-making machine **characterised in that** it includes an entrainment device (1) according to one or more of the previous claims 1-14.

## Patentansprüche

1. Vorrichtung (1) zum Saugen einer Flüssigkeit, umfassend ein Ansaugrohr (2), das zur Verbindung mit einer Sammelleitung (3) geeignet ist, welche Dampf vom Hydraulikkreis (4) in einer Kaffeezubereitungsmaschine empfängt, wobei Ventilmittel im Rohr (2) aus einem Verschluss (10) bestehen, der zwischen einer Position zur Aktivierung des Saugens, wobei der Verschluss (10) im Ansaugrohr (2) einen großen Saugdurchtritt öffnet, sowie einer Folgeposition beweglich ist, sobald das Saugen aktiviert wurde, wobei der Verschluss (10) im Ansaugrohr (2) einen Saugdurchtritt öffnet, der enger ist, als der zuerst geöffnete, um das Saugen herbeizuführen, **dadurch gekennzeichnet, dass** die Position zur Aktivierung des Saugens einer Position mit herabgesenktem Verschluss (10) entspricht, die durch die Wirkung seines Eigengewichts erreicht wird.

2. Saugvorrichtung (1) nach Anspruch 1, **dadurch gekennzeichnet, dass** die Folgeposition nach der Aktivierung des Saugens einer Position mit angehobenem Verschluss (10) entspricht, die durch die Wirkung des Unterdrucks erreicht wird, der im Rohr (2) durch den Durchtritt des Dampfes zur Sammelleitung (3) geschaffen wird.

3. Saugvorrichtung (1) nach einem oder mehreren der vorangehenden Ansprüche, **dadurch gekennzeichnet, dass** das Rohr (2) aus einem elastisch verformbaren Material ist.

4. Saugvorrichtung (1) nach einem oder mehreren der vorangehenden Ansprüche, **dadurch gekennzeichnet, dass** der Verschluss (10) eingeschränkt ist, um axial in einer Öffnung (11) in einer Tragekonsole (12), die im Rohr (2) bereitgestellt ist, zu gleiten.

5. Saugvorrichtung (1) nach Anspruch 4, **dadurch gekennzeichnet, dass** der Verschluss (10) einen stielförmigen Körper (13) aufweist, der in der Öffnung (11) gleitet, mit welcher der stielförmige Körper (13) einen Hohlraum (14) für den Durchtritt der Flüssigkeit begrenzt, wobei der stielförmige Körper (13) obere Mittel zur Anlage an der oberen Oberfläche (15) der Konsole (12) und untere Mittel zur Anlage an der unteren Oberfläche (16) der Konsole (12) aufweist.

6. Saugvorrichtung (1) nach Anspruch 5, **dadurch gekennzeichnet, dass** die Anlagemittel winklig versetzte radiale Flügel (17) umfassen.

7. Saugvorrichtung (1) nach den Ansprüchen 5 bis 6, **dadurch gekennzeichnet, dass** die Anlagemittel einen vergrößerten Kopf (18) umfassen.

8. Saugvorrichtung (1) nach den Ansprüchen 6 bis 7, **dadurch gekennzeichnet, dass** sich die radialen Flügel (17) und/oder der vergrößerte Kopf (18) verjüngen.

9. Saugvorrichtung (1) nach Anspruch 7, **dadurch gekennzeichnet, dass** der vergrößerte Kopf (18) eine Verschlussoberfläche (19) über der Öffnung (11) in der Konsole (12) umfasst, aufweisend mindestens eine Rille (20) zum kalibrierten Durchtritt der Flüssigkeit durch die Öffnung (14).

10. Saugvorrichtung (1) nach einem oder mehreren der vorangehenden Ansprüche, **dadurch gekennzeichnet, dass** die Innenseite des Rohres (2) eine axial offene untere Tragebasis (21) und eine axial offene obere Tragebasis (22) enthält, zwischen denen der Verschluss (10) axial beweglich ist.

11. Saugvorrichtung (1) nach Anspruch 10, **dadurch gekennzeichnet, dass** der Verschluss (10) einen Bolzen (23) umfasst, der gemeinsam mit dem Rohr (2) seitlich einen ringförmigen Hohlraum (24) bildet.

12. Saugvorrichtung (1) nach Anspruch 11, **dadurch gekennzeichnet, dass** der Bolzen (23) eine Verschlussoberfläche (25) über der offenen oberen Basis (22) mit mindestens einer Rille (26) zum kalibrierten Durchtritt der Flüssigkeit durch die offene obere Basis (22) aufweist.

13. Saugvorrichtung (1) nach Anspruch 10, **dadurch gekennzeichnet, dass** die offene obere Basis (22) ein rohrförmiges Element (29) umfasst, das im Rohr (2) enthalten ist und dass zwischen der seitlichen Außenfläche des rohrförmigen Elements (29) und der seitlichen Innenfläche des Rohres (2) Raum (30) für den kalibrierten Durchtritt der Flüssigkeit vorhanden ist.

14. Saugvorrichtung (1) nach Anspruch 13, **dadurch gekennzeichnet, dass** der Bolzen (23) eine Oberfläche (31) zum selektiven Verschluss des rohrförmigen Elements (29) aufweist, das dazu geeignet ist, den Durchtritt der Flüssigkeit ausschließlich durch den Raum (30) zu aktivieren.

15. Verfahren zum Saugen einer Flüssigkeit mittels einer Saugvorrichtung, umfassend ein Ansaugrohr (2), das zur Verbindung mit einer Sammelleitung (3) geeignet ist, welche den Dampf vom Hydraulikkreis (4) einer Kaffeezubereitungsmaschine empfängt, **gekennzeichnet durch** ein anfängliches Öffnen eines großen Durchtritts im Ansaugrohr (2), um das Saugen von Flüssigkeit **durch** die Positionierung eines im Ansaugrohr (2) enthaltenen Verschlusses (10) in einer herabgesenkten Position zu aktivieren, die **durch** die Wirkung seines Eigengewichts erreicht wird und Reduzieren des Durchtritts für die folgende Saugphase, um die Flüssigkeit auf die erforderliche Temperatur mittels Dampf zu erhitzen, indem der Verschluss (10) im Ansaugrohr (2) in eine angehobene Position bewegt wird, die **durch** die Wirkung des Unterdrucks erreicht wird, der **durch** den Dampfstrom durch die Sammelleitung (3) geschaffen wird.

16. Kaffeezubereitungsmaschine, **dadurch gekennzeichnet, dass** sie eine Saugvorrichtung (1) nach einem oder mehreren der vorangehenden Ansprüche 1 bis 14 einschließt.

## Revendications

1. Appareil (1) pour l'entraînement d'un liquide, comprenant un tube d'aspiration (2) pouvant se raccorder à un collecteur (3) recevant la vapeur du circuit hydraulique (4) dans une machine à café, des moyens à vannes à l'intérieur dudit tube (2) consistant en un clapet (10) mobile entre une position pour activer l'entraînement, dans laquelle ledit clapet (10) ouvre un ample passage d'entraînement à l'intérieur dudit tube d'aspiration (2), et une position suivante, une fois que ledit entraînement a été activé, dans laquelle ledit clapet (10) ouvre, à l'intérieur dudit tube d'aspiration (2), un passage d'entraînement plus étroit que le premier passage ouvert pour provoquer ledit entraînement, **caractérisé en ce que** ladite position d'activation d'entraînement correspond à une position de clapet (10) abaissé, sous l'effet de son propre poids.

2. Appareil de entraînement (1) selon la revendication 1, **caractérisé en ce que** ladite position suivante, après l'activation d'entraînement, correspond à une position de clapet (10) relevé sous l'effet de la sous-pression produite à l'intérieur dudit tube (2) par le passage de ladite vapeur en direction dudit collecteur (3).

3. Appareil d'entraînement (1) selon une ou plusieurs des revendications précédentes, **caractérisé en ce que** ledit tube (2) est fabriqué dans un matériau élastiquement déformable.

4. Appareil d'entraînement (1) selon une ou plusieurs des revendications précédentes, **caractérisé en ce que** ledit clapet (10) est forcé de coulisser axialement à l'intérieur d'un trou (11), dans un étrier de support (12) situé à l'intérieur dudit tube (2).

5. Appareil d'entraînement (1) selon la revendication 4, **caractérisé en ce que** ledit clapet (10) présente un corps en forme de tige (13), coulissant à l'intérieur dudit trou (11), formant avec ledit corps en forme de tige (13) une cavité (14) pour le passage dudit liquide, ledit corps en forme de tige (13) ayant des moyens supérieurs de butée contre la surface supérieure (15) dudit étrier (12), et des moyens inférieurs de butée contre la surface inférieure (16) dudit étrier (12).

6. Appareil d'entraînement (1) selon la revendication 5, **caractérisé en ce que** lesdits moyens de butée comprennent des ailes radiales angulairement décalées (17).

7. Appareil d'entraînement (1) selon les revendications 5-6, **caractérisé en ce que** lesdits moyens de butée comprennent une tête élargie (18).

8. Appareil d'entraînement (1) selon les revendications 6-7, **caractérisé en ce que** lesdites ailes radiales (17) et/ou ladite tête élargie (18) sont coniques.

9. Appareil d'entraînement (1) selon la revendication 7, **caractérisé en ce que** ladite tête élargie (18) comprend une surface de fermeture (19) sur ledit trou (11) dans ledit étrier (12), ayant au moins une rainure (20) pour le passage calibré dudit liquide dans ladite cavité (14).

10. Appareil d'entraînement (1) selon une ou plusieurs des revendications précédentes, **caractérisé en ce que** l'intérieur dudit tube (2) contient une base de support inférieure axialement ouverte (21) et une base de support supérieure axialement ouverte (22), entre lesquelles ledit clapet (10) se déplace axialement.

11. Appareil d'entraînement (1) selon la revendication 10, **caractérisé en ce que** ledit clapet (10) comprend une goupille (23) formant latéralement une cavité en forme d'anneau (24) avec ledit tube (2).

12. Appareil d'entraînement (1) selon la revendication 11, **caractérisé en ce que** ladite goupille (23) présente une surface de fermeture (25) sur ladite base supérieure ouverte (22) avec au moins une rainure (26) pour le passage calibré dudit liquide dans ladite base supérieure ouverte (22).

13. Appareil d'entraînement (1) selon la revendication 10, **caractérisé en ce que** ladite base supérieure ouverte (22) comprend un élément tubulaire (29) à l'intérieur dudit tube (2) et **en ce que**, entre la surface latérale extérieure dudit élément tubulaire (29) et la surface latérale intérieure dudit tube (2), il y a un espace (30) pour le passage calibré dudit liquide.

14. Appareil d'entraînement (1) selon la revendication 13, **caractérisé en ce que** ladite goupille (23) présente une surface (31) pour fermer, de façon sélective, ledit élément tubulaire (29), adapté de sorte à permettre le passage dudit fluide exclusivement dans ledit espace (30).

15. Méthode pour l'entraînement d'un liquide au moyen d'un appareil d'entraînement comprenant un tube d'aspiration (2) adapté pour se raccorder à un collecteur (3) recevant la vapeur du circuit hydraulique (4) d'une machine à café, **caractérisée en ce qu'**elle commence par l'ouverture d'un ample passage à l'intérieur dudit tube d'aspiration (2) pour activer l'entraînement du fluide en positionnant un clapet (10), situé à l'intérieur dudit tube d'aspiration (2), dans une position abaissée, sous l'effet de son propre poids, et par la réduction dudit passage pour la phase d'entraînement suivante, afin de chauffer ledit liquide à la température souhaitée au moyen de ladite vapeur en déplaçant ledit clapet(10), à l'intérieur dudit tube d'aspiration (2) dans une position relevée, sous l'effet de la sous-pression produite par le flux de vapeur dans ledit collecteur (3).

16. Machine à café **caractérisée en ce qu'**elle comprend un appareil d'entraînement (1) selon une ou plusieurs des revendications précédentes 1 à 14.
